# EUROPEAN PATENT APPLICATION

(11) **EP 4 651 251 A1**
(43) Date of publication of application: **19.11.2025**
(21) Application number: 25171159.4
(22) Date of filing: 17.04.2025
(51) Int. Cl.: H01M 10/052, H01M 4/131, H01M 4/525, H01M 4/58

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(30) Priority: 26.04.2024 KR 20240056167
(71) Applicant: SAMSUNG SDI CO., LTD., Yongin-si, Gyeonggi-do 17084 (KR)
(72) Inventor: KIM, Young-Ki, 17084 Yongin-si (KR); CHOI, Aram, 17084 Yongin-si (KR); KIM, Sangmi, 17084 Yongin-si (KR); DOO, Sungwook, 17084 Yongin-si (KR); KANG, Gwiwoon, 17084 Yongin-si (KR); LEE, Soonrewl, 17084 Yongin-si (KR)
(74) Representative: Marks & Clerk LLP

(57) **Abstract**

A positive electrode active material for a rechargeable lithium battery includes first particles including a compound of Chemical Formula 1 (containing Mn) having a first average particle diameter, and second particles including a compound of Chemical Formula 2 (containing Co) having a second average particle diameter that is greater than the first average particle diameter, where the content of the first particles is greater than the content of the second particles, and a ratio of the Mn content to the Co content in the positive electrode active material is about 7:1 to about 12:1. Also disclosed are a positive electrode including the positive electrode active material, and a rechargeable lithium battery including the positive electrode.

## Description

### BACKGROUND

### 1. Field

The present invention relates to a positive electrode active material for a rechargeable lithium battery, a positive electrode including the positive electrode active material, and a rechargeable lithium battery including the positive electrode. More particularly, the present invention relates to a positive electrode active material including an olivine-based lithium compound, a positive electrode including the positive electrode active material, and a rechargeable lithium battery including the positive electrode.

### 2. Description of the Related Art

Recently, with the rapid proliferation (spread) of electronic devices that use batteries (such as mobile phones and/or laptop computers) and/or electric vehicles, the demand for rechargeable batteries with relatively high energy densities and high capacities has been rapidly increasing. Accordingly, research and development efforts to enhance (improve) the performance of rechargeable batteries, e.g., rechargeable lithium batteries, are actively underway.

A rechargeable lithium battery is a battery that may include a positive electrode and a negative electrode (containing active materials capable of intercalation and deintercalation of lithium ions), along with an electrolyte. These batteries may produce electrical energy through oxidation and reduction reactions during the intercalation and deintercalation of lithium ions at the positive electrode and negative electrode. The above information disclosed in this Background section is only for enhancement of understanding of the background of the disclosure and therefore it may contain information that does not constitute prior art.

### SUMMARY

The present invention provides a positive electrode active material having high energy density, a high operating voltage, and high conductivity (e.g., electron conductivity).

The present invention also provides a rechargeable lithium battery having high energy density, a high operating voltage, and high low-temperature properties.

Additional aspects will be set forth in part in the description which follows and, in part, will be apparent from the description, or may be learned by practice of the presented embodiments of the disclosure.

In a first aspect, the present invention provides a positive electrode active material that includes first particles including a compound of Chemical Formula 1 and having a first average particle diameter, and second particles including a compound of Chemical Formula 2 and having a second average particle diameter that is greater than the first average particle diameter, wherein the content (*e.g.,* amount) of the first particles is greater than the content (*e.g.,* amount) of the second particles.

Chemical Formula 1 Lia₁Fex₁Mn_{y1}Xz₁PO_{4-b1}

In Chemical Formula 1, 0.8≤a1≤1.2, 0.8≤x1≤0.9, 0.1≤y1≤0.2, 0.001≤z1≤0.05, 0≤b1≤0.05, x1 + y1 + z1 = 1, and X is at least one element selected from the group consisting of Ti, Mg, V and Nb.

Chemical Formula 2 Liₐ₂Niₓ₂Co_{y2}B_{z2}Y_{c2}O_{2-b2}

In Chemical Formula 2, 0.8≤a2≤1.2, 0.8≤x2≤1.0, preferably 0.8≤x2<1.0, 0.05≤y2≤0.1, 0≤z2≤0.2, 0≤c2≤0.05, 0≤b2≤0.05 (e.g., 0<b2≤0.05), x2 + y2 + z2 = 1, B is Al, Mn and/or a combination thereof, and Y is at least one element selected from the group consisting of Ti, Mg, Zr, Mo and Nb. The positive electrode active material includes manganese (Mn) (from Chemical Formula 1) and cobalt (Co) (from Chemical Formula 2), and a ratio of the Mn content (*e.g.,* amount) to the Co content (*e.g.,* amount) in the positive electrode active material is about 7 to about 12 (*e.g.,* about 7:1 to about 12:1).

In a second aspect the present invention provides a positive electrode for a rechargeable lithium battery that includes a positive electrode current collector, and a positive electrode active material layer on the positive electrode current collector. The positive electrode active material layer includes the aforementioned positive electrode active material, a conductive material and a binder. In a third aspect the present invention provides a rechargeable lithium battery that includes the aforementioned positive electrode, a negative electrode including a negative electrode current collector and a negative electrode active material layer on the negative electrode current collector, and a separator between the positive electrode and the negative electrode.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:
FIG. 1 is a simplified conceptual diagram showing a rechargeable lithium battery according to one or more embodiments of the present disclosure.
FIGS. 2 to 5 are each a simplified diagram of a rechargeable lithium battery according to one or more embodiments of the present disclosure, where FIG. 2 is a cylindrical battery, FIG. 3 is a prismatic battery, and FIGS. 4 and 5 are pouch-type (kind) batteries.
FIG. 6 is an enlarged view showing a positive electrode active material layer of a rechargeable lithium battery according to one or more embodiments of the present disclosure.
FIG. 7 is a scanning electron microscope (SEM) image showing a positive electrode active material of Preparation Example 1.
FIG. 8 is a scanning electron microscope (SEM) image showing a positive electrode active material of Preparation Example 2.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

It will be understood that when an element, such as an area, layer, film, region or portion, is referred to as being "on" another element, it can be directly on or one or more intervening elements may be present. In contrast, when an element or layer is referred to as being "directly on" or "immediately adjacent to" another element or layer, there are no intervening elements or layers present. In addition, it will also be understood that when an element is referred to as being "between" two elements, it can be the only element between the two elements, or one or more intervening elements may also be present.

In the drawings, thicknesses of components are exaggerated for clarity to effectively explain the technical contents. Unless otherwise noted, like reference numerals denote like elements throughout the attached drawings and the written description, and thus, duplicative descriptions thereof may not be provided.

As used herein, the singular forms "a," "an" and "the" are intended to include the plural forms as well, unless the context clearly indicates otherwise.

Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof. In addition, unless otherwise specially noted, the phrase "A or B" may indicate "A but not B", "B but not A", or "A and B".

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof.

As used herein, the term "and/or" includes any and all combinations of one or more of the associated listed items.

As used herein, the terms "use," "using," and "used" may be considered synonymous with the terms "utilize," "utilizing," and "utilized," respectively.

In this specification, "combination thereof" may refer to a mixture, a stack, a composite, a copolymer, an alloy, a blend, and a reaction product of components.

In the present disclosure, when particles are spherical, "diameter" indicates a particle diameter or an average particle diameter, and when the particles are non-spherical, the "diameter" indicates a major axis length or an average major axis length. Unless otherwise defined in this disclosure, a particle diameter may be an average particle diameter. Also, the particle diameter means an average particle diameter (D₅₀) which refers to the average diameter of particles whose cumulative volume corresponds to 50 vol% in the particle size distribution (*e.g.,* cumulative distribution), and refers to the value of the particle size corresponding to 50% from the smallest particle when the total number of particles is 100% in the distribution curve accumulated in the order of the smallest particle size to the largest particle size. The average particle diameter (D₅₀) may be measured by a method generally utilized and/or generally available to those skilled in the art, for example, may be measured by a particle size analyzer, or may also be measured using a transmission electron microscope (TEM) image or a scanning electron microscope (SEM) image. Alternatively, the average particle diameter may be measured by a measuring device using dynamic light-scattering, wherein the number of particles is counted for each particle size range by performing data analysis, and an average particle diameter (D₅₀) value may then be obtained by calculation therefrom. Also, the average particle diameter may be measured using a laser diffraction method. When measured by the laser diffraction method, specifically, after dispersing particles to be measured in a dispersion medium, the dispersion medium is introduced into a commercial laser diffraction particle size measurement instrument (*e.g.,* Microtrac MT 3000) and irradiated with ultrasonic waves of about 28 kHz at an output of about 60 W, and the average particle diameter (D₅₀) based on about 50% of particle size distribution in the measurement instrument may then be calculated.

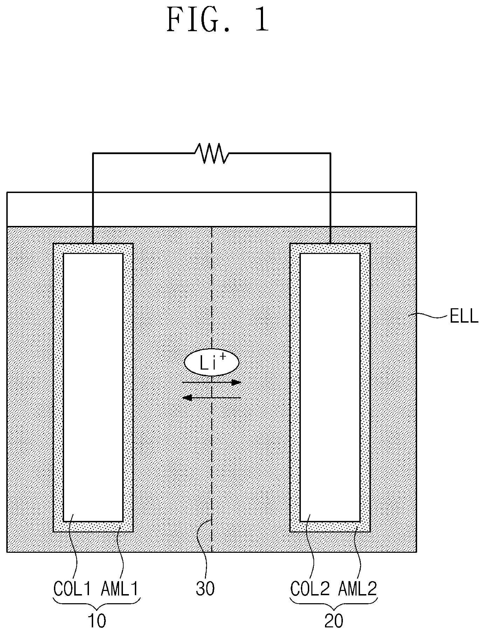

FIG. 1 is a simplified conceptual diagram showing a rechargeable lithium battery according to one or more embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (*e.g.,* spaced apart and/or separated) from each other with the separator 30 therebetween. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

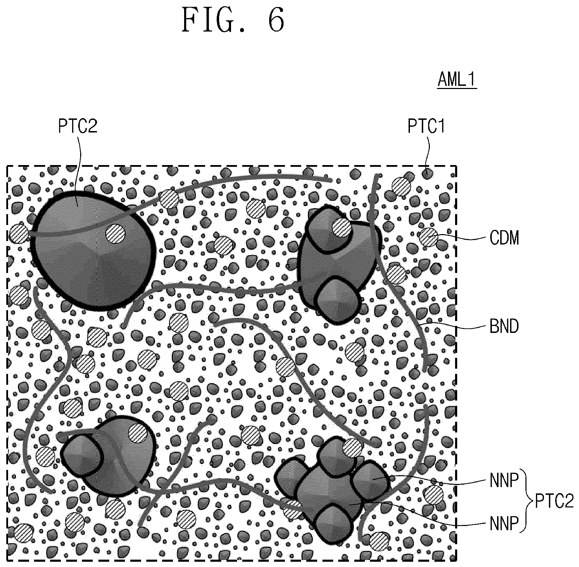

The positive electrode 10 for a rechargeable lithium battery includes a current collector COL1 and a positive electrode active material layer AML1 formed on the current collector COL1. The positive electrode active material layer AML1 includes a positive electrode active material, a binder and a conductive material. The positive electrode active material layer AML1 according to embodiments of the present disclosure will be described in detail with reference to FIG. 6. Aluminium (Al) may be used as the current collector COL1, but the present disclosure is not limited thereto.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (*e.g.,* an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach (*e.g.,* effectively attach) the negative electrode active material particles to each other and also to attach (*e.g.,* effectively attach) the negative electrode active material to the current collector COL2. The binder may include a non-aqueous binder, an aqueous binder, a dry binder, and/or a (*e.g.,* any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide, polyimide, and/or a (*e.g.,* any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resins, polyvinyl alcohol, and/or a (*e.g.,* any suitable) combination thereof.

When an aqueous binder is used as the negative electrode binder, a cellulose-based compound capable of imparting viscosity may be further included. The cellulose-based compound may include at least one of carboxymethyl cellulose, hydroxypropyl methyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (*e.g.,* any suitable) combination thereof.

The conductive material may be used to impart conductivity (*e.g.,* electrical conductivity) to the electrode. Any material that does not cause chemical change (*e.g.,* does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, and/or the like, in a form of a metal powder or a metal fiber; a conductive polymer such as a polyphenylene derivative; and/or a (*e.g.,* any suitable) mixture thereof.

The negative current collector COL2 may include a copper foil, a nickel foil, a stainless-steel foil, a titanium foil, a nickel foam, a copper foam, a polymer substrate coated with a conductive metal, and/or a (*e.g.,* any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon, and/or a (*e.g.,* any suitable) combination thereof. The crystalline carbon may be graphite such as non-shaped, sheet-shaped, flake-shaped, sphere-shaped, or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x ≤ 2), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (*e.g.,* any suitable) combination thereof). The Sn-based negative electrode active material may include Sn, SnOₓ (0 < x ≤ 2, *e.g.*, SnO₂), a Sn-based alloy, and/or a (*e.g.,* any suitable) combination thereof.

The silicon-carbon composite may be a composite of silicon and amorphous carbon. According to one or more embodiments, the silicon-carbon composite may be in a form of silicon particles with amorphous carbon coated on the surface of the silicon particles. For example, the silicon-carbon composite may include a secondary particle (core) in which primary silicon particles are assembled (*e.g.,* agglomerated), and an amorphous carbon coating layer (shell) on the surface of the secondary particle. The amorphous carbon may also be between the primary silicon particles, and for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (*e.g.,* any suitable) combination thereof on a surface (*e.g.,* one or both surfaces (*e.g.,* opposite surfaces)) of the porous substrate.

The porous substrate may be a polymer film formed of any one selected polymer including polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamide-imide, polybenzimidazole, polyether sulfone, polyphenylene oxide, a cyclic olefin copolymer, polyphenylene sulfide, polyethylene naphthalate, a glass fiber, polytetrafluoroethylene (*e.g.,* TEFLON), and/or a copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg (OH)₂, boehmite, and/or a (*e.g.,* any suitable) combination thereof, but the present disclosure is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, and/or alcohol-based solvent, an aprotic solvent, and/or a (*e.g.,* any suitable) combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), fluoroethylene carbonate (FEC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, and/or an ether bond), and/or the like; amides such as dimethylformamide; dioxolanes such as 1,3-dioxolane, 1,4-dioxolane, and/or the like; and/or sulfolanes, and/or the like.

The non-aqueous organic solvents may be used alone or in a combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and/or lithium bis(oxalato)borate (LiBOB).

### Rechargeable Lithium Battery

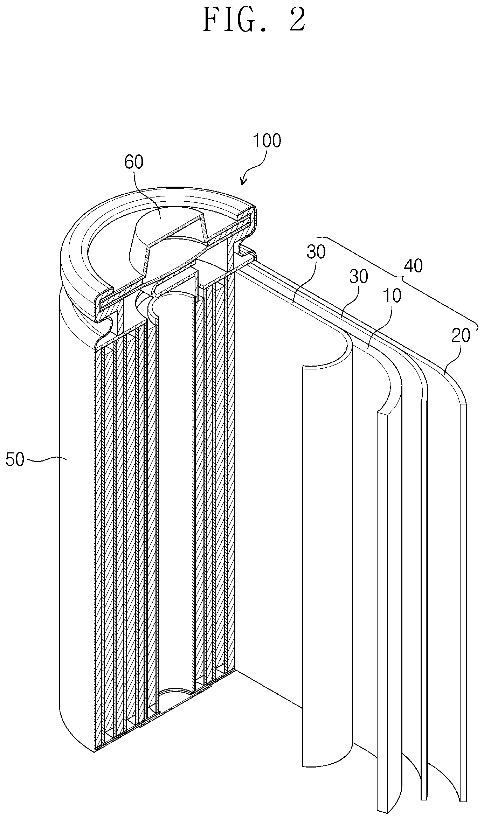

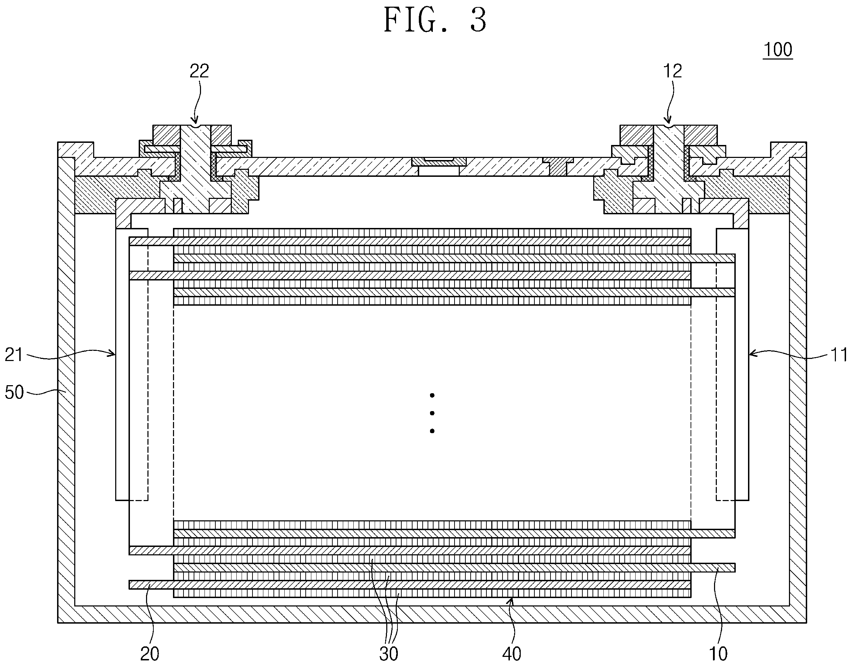

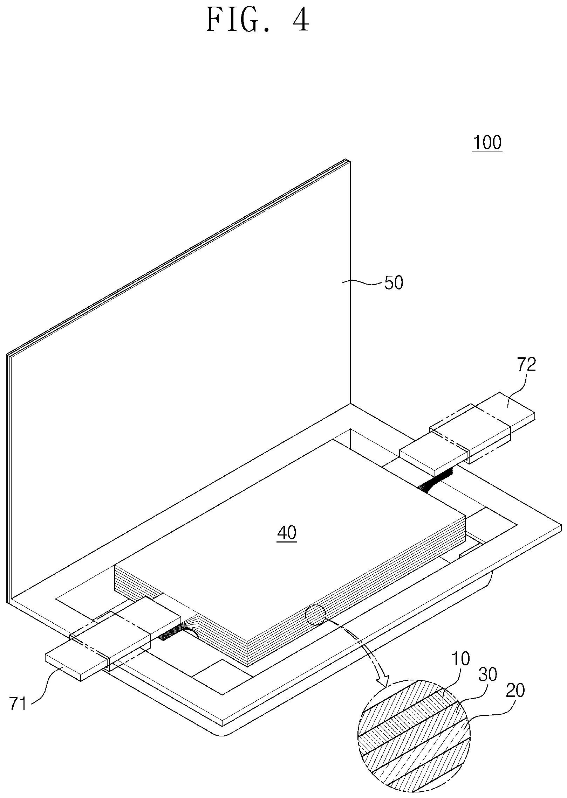

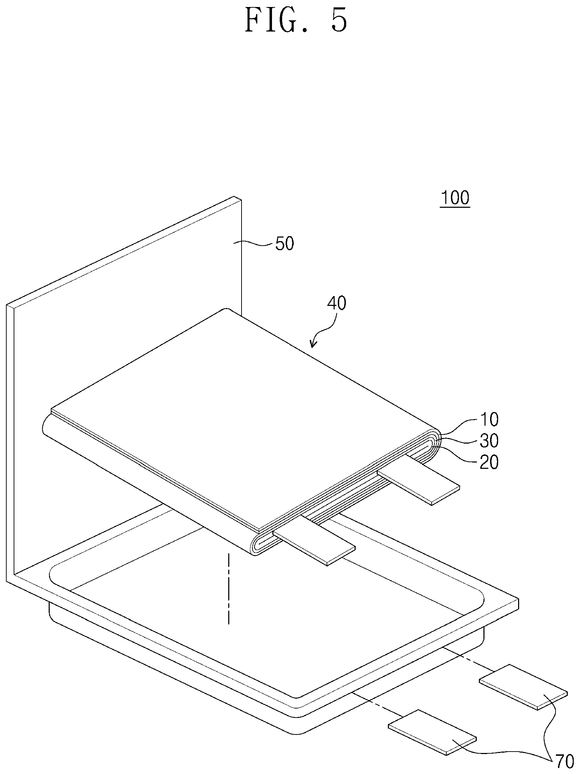

The rechargeable lithium battery may be classified into cylindrical, prismatic, pouch, coin-type batteries, and/or the like, depending on their shape. FIGS. 2 to 5 are schematic views illustrating a rechargeable lithium battery according to one or more embodiments of the present disclosure. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72, serving as an electrical path for conducting the current formed in the electrode assembly 40 to the outside.

The rechargeable lithium battery according to one or more embodiments may be applied to automobiles, mobile phones, and/or various types of electric devices, as non-limiting examples.

FIG. 6 illustrates an enlarged view of a positive electrode active material layer of a rechargeable lithium battery according to one or more embodiments of the present disclosure.

Referring to FIG. 6, a positive electrode active material layer AML1 (see, *e.g.,* FIG. 1) includes a first particle PTC1 (*e.g.*, a plurality of first particles PTC1), a second particle PTC2 (*e.g.,* a plurality of second particles PTC2), a conductive material CDM, and a binder BND. The plurality of the first particles PTC1 and the plurality of the second particles PTC2 constitute a positive electrode active material according to one or more embodiments of the present disclosure.

The positive electrode active material layer AML1 may further include an additive that may serve as a sacrificial positive electrode.

The content (*e.g.,* amount) of the positive electrode active material (PTC1 and PTC2) in the positive electrode active material layer AML1 may range from about 90 wt% to about 99 wt% relative to about 100 wt% of the positive electrode active material layer AML1. The content of each of the binder BND and the conductive material CDM may be about 0.5 wt% to about 5 wt% relative to about 100 wt% of the positive electrode active material layer AML1.

The binder BND may combine the first particles PTC1, the second particles PTC2, and the conductive material CDM with each other. For example, the binder BND may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the present disclosure is not limited thereto.

The conductive material CDM may be used to improve conductivity of the positive electrode active material layer AML1 (*e.g.*, may be an electron conductor). Any conductive material that does not cause a chemical change of the positive electrode active material layer AML1 may be used as the conductive material CDM. For example, the conductive material CDM may include: a carbon-based material such as natural graphite, artificial graphite, carbon black, acetylene black, Ketjen black, carbon fiber, carbon nano-fiber, and/or carbon nano-tube; a metal-based material containing copper, nickel, aluminium, silver and/or the like and having a metal powder or metal fiber form; a conductive polymer such as a polyphenylene derivative; and/or a (*e.g.,* any suitable) mixture thereof.

Hereinafter, each of the first particle PTC1 and the second particle PTC2 will be explained in more detail.

### First Particle PTC1

The first particle PTC1 (*e.g.,* the plurality of first particles PTC1) may (each) have a single particle form (*e.g.,* each being a monolithic particle). In the description, the single particle may refer to a sole particle that does not have a grain boundary inside. The single particle has a phase morphology, and may refer to a single particle, a monolith structure, a monolithic structure, or a non-agglomerated particle in which the particles exist as an independent phase that are not agglomerated. For example, the single particle may be a single crystal. The single particle may be in an independently separated form (*e.g.,* in the form of separate, independent particles). Alternatively, in one or more embodiments, the first particle may be a particle containing several crystals. In one or more embodiments, the first particle may be in the form of 2 to 100 single particles attached to each other.

The first particle PTC1 (*e.g.,* the plurality of first particles PTC1) may be a positive electrode active material of a nano-type (kind), i.e. of a nanometer size, or a micro-type (kind), i.e. of a micrometer size. The first particles PTC1 may each include at least one primary particle (*e.g.,* may each be a (*e.g.,* one) primary particle). In one or more embodiments, the first particles PTC1 may each have a spherical or elliptical shape, in which primary particles are agglomerated. In one or more embodiments, even though the primary particles may be agglomerated, the first particles PTC1 may not have a spherical shape but may each have a random shape.

The first particles PTC1 may be provided in one or more suitable sizes. For example, the average particle diameter of the first particles PTC1 may be about 500 nm to about 2.5 µm, or about 1 µm. The minimum particle diameter of the first particles PTC1, that is, the average particle size of the primary particles may be about 100 nm to about 500 nm, about 100 nm to about 300 nm, or about 100 nm to about 200 nm.

In one or more embodiments, the average particle diameter may be measured by a particle size analyzer. The average particle diameter may refer to the diameter of particles at an accumulated volume of about 50 vol% (D₅₀) in particle size distribution.

In one or more embodiments, the minimum particle diameter, that is, the size of the primary particles may refer to a diameter measured by randomly selecting about 30 primary particles on an electron microscope image of the first particles PTC1.

In one or more embodiments, the first particles PTC1 may each include a coating layer on the surface thereof. The coating layer may cover the entire surface of the first particle PTC1 or may cover a portion of the surface of the first particle PTC1. For example, the coating layer may include carbon and/or a carbon-containing compound. The coating layer may further include at least one selected from the group consisting of a titanium-containing compound, a magnesium-containing compound and a vanadium-containing compound. The metal-containing compound such as the titanium-containing compound, the magnesium-containing compound and/or the vanadium-containing compound may be, for example, a metal oxide, a metal hydroxide, a metal carbonate, a synthesized compound thereof, and/or a (*e.g.,* any suitable) mixture thereof. The metal-containing compound may further include other metal or non-metal elements. For example, the metal-containing compound may further include lithium. The first particles PTC1 may show improved structural stability and improved electrical conductivity due to the coating layer.

The first particles PTC1 each includes an olivine-based lithium compound represented by Chemical Formula 1.

Chemical Formula 1 Liₐ₁Feₓ₁Mn_{y1}Xz₁PO_{4-b1}

In Chemical Formula 1, 0.8≤a1≤1.2, 0.8≤x1≤0.9, 0.1≤y1≤0.2, 0.001≤z1≤0.05, 0≤b1≤0.05, and x1 + y1 + z1 = 1 is satisfied. X is at least one element selected from the group consisting of Ti, Mg, V and Nb. X is a dopant doped in the first particle PTC1. For example, X may include Ti.

The first particles PTC1 may each further include carbon derived from the first coating layer. The carbon element content (*e.g.,* amount) in the first particle PTC1 may be about 0.5 wt% to about 5 wt%, about 0.5 wt% to about 3 wt%, or about 0.5 wt% to about 2 wt% or about 1.5 wt% to about 2.5 wt%.

### Second Particle PTC2

The second particle PTC2 (*e.g.,* the plurality of second particles PTC2) may (each) have a single particle form similar to the above-described first particle PTC1. The explanation of the single particle may be the same as or similar to that previous explanation for the first particles PTC1, and thus a redundant explanation may not be provided herein. In one or more embodiments, one single particle may constitute the second particle PTC2 (e.g., may be in a form of a single particle). In one or more embodiments, the second particle PTC2 may have a form in which a plurality of single particles NNP are attached to each other. Because the positive electrode active material according to the present disclosure includes the second particles PTC2 with a single particle form, a rechargeable battery with high capacity and high energy density may be accomplished.

In one or more embodiments, the second particles PTC2 may each include a second coating layer on the surface thereof. By including the second coating layer, the second particles PTC2 may effectively suppress or reduce structural collapse due to repeated charging and discharging. Accordingly, the lifetime characteristics of the rechargeable battery may be improved.

The second coating layer may include a boron-containing compound, an aluminium-containing compound and/or a (*e.g.,* any suitable) combination thereof. The metal-containing compound in the second coating layer may be, for example, a metal oxide, a metal hydroxide, a metal carbonate, a synthesized compound thereof, and/or a (*e.g.,* any suitable) mixture thereof. The metal-containing compound may further include other metal or nonmetal elements. For example, the second coating layer may further include lithium, manganese, and/or nickel.

A method for measuring the metal content (*e.g.,* amount) in the second coating layer of the second particle PTC2 may include performing scanning electron microscopy-energy dispersive X-ray spectroscopy (SEM-EDS) on the second particles PTC2. Through the analysis, the boron and/or aluminium contents in the second coating layer may be confirmed. As a method for measuring the metal content (*e.g.,* amount) in the second coating layer, an inductively coupled plasma-mass spectrometry (ICP-MS), an inductively coupled plasma optical emission spectroscopy (ICP-OES) and/or the like, may be used in addition to the SEM-EDS.

The average particle diameter of the second particles PTC2 may be about 2 µm to about 15 µm, about 2 µm to about 10 µm, about 2 µm to about 5 µm, or about 2.5 µm to about 5 µm. The average particle diameter of the second particles PTC2 is greater than the average particle diameter of the first particles PTC1. If the second particles PTC2 each includes a plurality of single particles NNP, the average size of the single particles NNP of the second particles PTC2 may be greater than the average particle diameter of the first particles PTC1.

In one or more embodiments, the particle diameter may be obtained by measuring a diameter of about 30 randomly selected second particles PTC2 on an electron microscope image of a positive electrode active material, and taking the diameter of particles at an accumulated volume of about 50 vol% (D₅₀) in particle size distribution as an average particle diameter.

Alternatively, in one or more embodiments of the present disclosure, the second particle PTC2 may have a secondary particle form (in a form of secondary particles) in (each of) which primary particles are agglomerated. In such embodiments, the second particles PTC2 may each have a granular or spherical shape, and the average particle diameter of the second particles PTC2 may be about 10 µm to about 30 µm, about 10 µm to about 20 µm, or about 10 µm to about 15 µm.

In other words, the second particle PTC2 can exist in two forms: a single particle form or a secondary particle form. In the single particle form, each second particle PTC2 is composed of a single particle, similar to the first particle PTC1. In contrast, the secondary particle form is composed of primary particles agglomerated together, resulting in a granular or spherical shape. The average particle diameter of these secondary particles is typically larger, ranging from about 10 µm to about 30 µm, compared to the single particle form. This structural difference impacts the performance and characteristics of the positive electrode active material in rechargeable lithium batteries.

Alternatively, in one or more embodiments of the present disclosure, the second particles PTC2 may be present as a mixture of a compound in a single particle form and a compound in a secondary particle form. In other words, in one or more embodiments, the second particles PTC2 may be composed of both single particles (*e.g.,* each being a monolithic particle) and secondary particles (*e.g.,* each secondary particle being made of agglomerated primary particles).

The second particles PTC2 each includes a lithium nickel-based composite oxide as a nickel-based active material. The second particles PTC2 include a high nickel-based positive electrode active material containing a high content (*e.g.,* amount) of nickel. The high nickel-based positive electrode active material may accomplish high capacity and high performance.

The second particles PTC2 each include a lithium nickel-based composite oxide with a layered structure, represented by Chemical Formula 2.

Chemical Formula 2 Liₐ₂Niₓ₂Co_{y2}B_{z2}Y_{c2}O_{2-b2}

In Chemical Formula 2, 0.8≤a2≤1.2, 0.8≤x2≤1.0, preferably 0.8≤x2<1.0, 0.05≤y2≤0.1, 0≤z2≤0.2 0≤c2≤0.05, 0≤b2≤0.05 (e.g., 0<b2≤0.05), and x2 + y2 + z2 = 1 are satisfied, and B is Al, Mn and/or a combination thereof. Y is at least one element selected from the group consisting of Ti, Mg, Zr, Mo and Nb. Y is a dopant doped in the second particles PTC2.

The positive electrode active material according to one or more embodiments of the present disclosure will be explained in more detail with reference to FIG. 6 again. The positive electrode active material of the present disclosure includes first particles PTC1 and second particles PTC2. The mixing ratio of the first particles PTC1 and the second particles PTC2 in the positive electrode active material may be about 90:10 to about 70:30 based on the total weight of the positive electrode active material. In one or more embodiments, the mixing ratio may be about 85:15 to about 80:20.

Co and Mn contained in the positive electrode active material according to one or more embodiments of the present disclosure have a certain content (*e.g.,* amount) ratio. The ratio of the Mn content (*e.g.,* amount) to the Co content (*e.g.,* amount) of the positive electrode active material has a value in a range of about 7 to about 12 (*e.g.,* about 7:1 to about 12:1). In embodiments, the ratio of the Mn content to the Co content may be about 7 to about 10, or about 8 to about 12 (*e.g.,* about 7:1 to about 10:1, or about 8:1 to about 12:1).

In the present disclosure, the Mn content (*e.g.,* amount) of the positive electrode active material refers to the number of moles of Mn relative to the total number of moles of all metals, excluding lithium and extremely small amounts of doped materials (for example, X in Chemical Formula 1 and Y in Chemical Formula 2) in the entire positive electrode active material including the first particles PTC1 and the second particles PTC2.

In the present disclosure, the Co content (*e.g.,* amount) of the positive electrode active material refers to the number of moles of Co relative to the total number of moles of all metals, excluding lithium and extremely small amounts of doped materials (for example, X in Chemical Formula 1 and Y in Chemical Formula 2) in the entire positive electrode active material including the first particles PTC1 and the second particles PTC2.

Because the second particles PTC2 include a high nickel-based positive electrode active material, higher capacity may be accomplished compared to the first particles PTC1. In the positive electrode active material according to such embodiments, the first particles PTC1 and the second particles PTC2 are mixed in an appropriate or suitable ratio, and capacity and an operating voltage may be improved compared to generally available lithium iron phosphate (LFP) batteries.

The above-described compound of Chemical Formula 2 (high nickel-based positive electrode active material) may have lower electrical conductivity compared to the compound of Chemical Formula 1. In the present disclosure, the second particles PTC2 may be single particles, and electrical conductivity and energy density may be improved.

The first particles PTC1 may have high stability and long lifetimes. By using the structurally stable first particles PTC1 as the main material of the positive electrode active material, the first particles PTC1 may compensate for the second particles PTC2, which have relatively low stability and short lifetimes.

When the first particles PTC1 and the second particles PTC2 have a certain mixing ratio, and the ratio of the Mn content (*e.g.,* amount) to the Co content (*e.g.,* amount) in the positive electrode active material satisfies the above ranges, the capacity and density of a lithium iron phosphate (LFP) positive electrode active material may be improved, while minimizing or reducing the deterioration of stability and lifetime.

The positive electrode active material of the present disclosure may improve mixture density, capacity and energy density by mixing the second particles PTC2 having an average size (diameter) in the range of several micrometers with the base of the first particles PTC1 having an average size (diameter) in the range of hundreds of nanometers. In one or more embodiments, the pellet density of the positive electrode active material of the present disclosure may be about 2.6 g/cc to about 2.8 g/cc. A rechargeable lithium battery including the positive electrode active material of the present disclosure may exhibit improved low-temperature properties. In other words, the positive electrode active material described in this disclosure can enhance mixture density, capacity, and energy density by combining second particles PTC2 with an average diameter of several micrometers (in micrometer scale) with first particles PTC1 that have an average diameter of hundreds of nanometers (in nanometer scale). This combination results in a pellet density of about 2.6 g/cc to about 2.8 g/cc. Consequently, a rechargeable lithium battery incorporating this positive electrode active material may demonstrate improved performance at low temperatures.

If the only particles included in the positive electrode active material were the first particles PTC1 composed of single particles having a very small average particle diameter, a large amount of a binder BND may be desired or required to attach the first particles PTC1 to a current collector COL1 (see, *e.g.,* FIG. 1). However, because the positive electrode active material of embodiments of the present disclosure additionally includes the second particles PTC2 having a large average particle diameter as well as the first particles PTC1, the positive electrode active material layer AML1 may attach to the current collector COL1 smoothly. For example, the content (*e.g.,* amount) of the binder BND in the positive electrode active material layer AML1 may be reduced due to the second particles PTC2.

The rechargeable lithium battery including the positive electrode active material of embodiments of the present disclosure may have improved low-temperature properties. In one or more embodiments, a ratio of the capacity at about -20°C relative to the initial capacity (capacity at about -20°C/initial capacity) of the rechargeable lithium battery may be about 40% or more, or about 50% or more. For example, the ratio of the capacity at about -20°C relative to the initial capacity (capacity at about -20°C/initial capacity) of the rechargeable lithium battery of the present disclosure may be about 40% to about 100%, about 50% to about 100%, or about 96% to about 99%.

The rechargeable lithium battery including the positive electrode active material of embodiments of the present disclosure may have an improved average voltage. In one or more embodiments, the average voltage of the rechargeable lithium battery may be about 3 V to about 4 V, about 3.3 V to about 3.5 V, or about 3.35 V to about 3.5 V. In other words, the average voltage of the rechargeable lithium battery, when discharging at a constant current of about 0.1 C and within a voltage range of about 2.5 V to about 4.25 V, may be about 3 V to about 4 V, about 3.3 V to about 3.5 V, or about 3.35 V to about 3.5 V, *e.g.,* specifically about 3.3 V to about 3.4 V.

The rechargeable lithium battery including the positive electrode active material of embodiments of the present disclosure may have improved lifetime characteristics. In one or more embodiments, the rechargeable lithium battery may have capacity retention of about 95% or more after charging and discharging 50 times with a constant current of about 0.1C at the above voltages. For example, the capacity retention may be about 96% to about 100%, or about 98% to about 100%.

### Method for Preparing Positive Electrode Active Material

A method for preparing the first particles PTC1 according to one or more embodiments of the present disclosure will be explained in more detail. An iron phosphate precursor, a lithium source, a carbon source and a dopant source may be added to a solvent and mixed. For example, the solvent may be water, ethanol and/or the like. The iron phosphate precursor may be a compound containing both iron (Fe) and phosphorus (P), and/or a (*e.g.,* any suitable) mixture of a compound containing iron (Fe) and a compound containing phosphorus (P). For example, the iron phosphate precursor may include FePO₄·H₂O, and/or a (*e.g.,* any suitable) mixture of FeSO₄ and H₃PO₄.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

The carbon source may include at least one selected from the group consisting of glucose, sucrose, fructose, cellulose, starch, citric acid, polyacrylic acid, polyethylene glycol, and dopamine.

The dopant source may include an oxide containing a dopant metal and/or a chloride containing a dopant metal. The dopant source may include the oxide or chloride of Mn of Chemical Formula 1. For example, the dopant source may further include at least one selected from the group consisting of titanium oxide, magnesium oxide, vanadium oxide and niobium oxide.

The mixture may be subjected to wet grinding. The wet grinding may be performed using a generally utilized and/or generally available wet mill capable of controlling temperature. For example, the wet grinding may use at least one selected from the group consisting of a bead mill, ball mill, attrition mill, apex mill, super mill and basket mill. Through the wet grinding process, the particles in the mixture may be ground to a fine size.

A dried mixture may be formed by removing the solvent from the mixture. In one or more embodiments of the present disclosure, the formation of the dried mixture may include performing a direct evaporation method on the mixture. For example, the direct evaporation method may include static drying or spray drying.

The dried mixture may be baked under an inert atmosphere. The inert atmosphere may be a nitrogen atmosphere and/or an argon atmosphere. The temperature of the baking process may be about 500°C to about 1000°C, or about 600°C to about 800°C. The performance time of the baking process may be about 4 hours to about 20 hours, or about 6 hours to about 12 hours. Through the baking of the dried mixture, first particles PTC1 including the compound of Chemical Formula 1 may be formed.

A dry grinding process may be performed on the baked first particles PTC1. As a result, the first particles PTC1 may have a single particle form (*e.g.,* monolithic form) as shown in FIG. 6.

A method for preparing the second particles PTC2 according to one or more embodiments of the present disclosure will be explained in more detail. A high nickel-based precursor may be prepared. The high nickel-based precursor includes Ni, as shown in Chemical Formula 2. The Ni content (*e.g.,* amount) relative to the total content (*e.g.,* amount) of metals in the high nickel-based precursor is greater than about 80 wt%. The high nickel-based precursor further includes Co and, in one or more embodiments, may yet further include Al and/or Mn.

In one or more embodiments, the high nickel-based precursor may be obtained through a co-precipitation method. For example, the co-precipitation method may include dissolving a transition metal raw material in a solvent such as distilled water, and continuously adding a solution of a transition metal salt together with a chelating agent and an alkaline aqueous solution to a reactor to cause precipitation. After collecting the precipitate in a slurry, the slurry solution may be filtered and dried to obtain a high nickel-based precursor that is a metal composite oxide.

In the present disclosure, the transition metal raw material may include a metal salt of Ni. The transition metal raw material may further include at least one salt of a metal selected from among Co, Al and Mn. The metal salt may include a sulfate, a nitrate, an acetate, a halide, a hydroxide and/or the like, and any one may be used as long as it dissolves in a solvent without limitation. The transition metal raw material according to one or more embodiments may include a nickel salt, a cobalt salt, an aluminium salt and/or a manganese salt. The transition metal raw material may be blended by controlling the molar ratio so that the high nickel-based precursor has the Ni content (*e.g.,* amount) of about 80 at% or more.

The high nickel-based precursor and a lithium source may be mixed in a certain ratio to form a mixture. For example, the high nickel-based precursor and the lithium source may be mixed in a molar ratio of about 1:1. The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

By removing the solvent from the mixture, a dried mixture may be formed. The dried mixture may be baked. The temperature of a baking process may be about 700°C to about 1000°C, or about 900°C to about 1000°C. The baking process may be performed under an oxidizing atmosphere such as air and/or oxygen. The heating time of the baking process may be about 10 hours to about 30 hours. In one or more embodiments of the present disclosure, a preliminary baking process may be additionally performed at about 150°C to about 800°C prior to the baking process. For example, by removing the solvent from the mixture, a dried mixture is formed. This dried mixture can then be heat treated at a temperature ranging from 700°C to 1000°C, or more specifically, from 900°C to 1000°C. The heat treatment process is conducted in an oxidizing atmosphere, such as air or oxygen, and lasts for 10 to 30 hours. Additionally, in some embodiments, a preliminary heat treatment process may be performed at temperatures between 150°C and 800°C before the main heat treatment process.

In one or more embodiments of the present disclosure, the baking process may be performed after additionally adding a melting agent to the mixture. The melting agent may be a compound containing at least one metal selected from the group consisting of Zr, La, S and Nb. By using the melting agent, the second particles PTC2 may be smoothly formed into a single particle form. In such embodiments, the average particle diameter of the second particles PTC2 may increase.

Through the baking process, second particles PTC2 may be formed from the mixture containing the high nickel-based precursor and the lithium source. A grinding process may be performed on the second particles PTC2 prepared.

A coating process may be performed on the ground second particles PTC2. For example, the second particles PTC2 and a coating raw material may be added to a solvent and mixed. For example, the coating raw material may include boron and/or aluminium. After filtering and drying the second particles PTC2, surface treatment may be performed on the second particles PTC2. The surface treatment may include a heating process under an oxidizing atmosphere such as air and/or oxygen. The surface treatment may be performed at a temperature of about 500°C to about 800°C.

In one or more embodiments of the present disclosure, the coating process may include a dry coating process. For example, the second particles PTC2 and the coating raw material may be put in a dry coating device and mixed by stirring without a solvent. The surface treatment may be performed on the dried mixture obtained.

By mixing the first particles PTC1 and the second particles PTC2, respectively prepared, the positive electrode active material according to the present disclosure is formed. The first particles PTC1 and the second particles PTC2 may be mixed in a weight ratio of about 90:10 to about 70:30.

Carbon element analysis according to one or more embodiments of the present disclosure may be performed by an Elementar Micro Cube elemental analyzer. For the following Examples, the particular operation method and conditions are as follows. About 1-2 mg of a sample was weighed in a tin cup, put in an automatic sampling tray, brought into a combustion tube via a ball valve, and burned at a combustion temperature of about 1000°C. After that, the burned gas was reduced using reducing copper to form carbon dioxide. The carbon dioxide was detected using a TCD detector.

In the method for measuring the carbon content (*e.g.,* amount) according to one or more embodiments of the present disclosure, scanning electron microscopy-energy dispersive X-ray spectroscopy (SEM-EDS) was performed with respect to the surface of the particles, and quantitative analysis was performed. As the method for measuring the carbon content (*e.g.,* amount), an inductively coupled plasma-mass spectrometry (ICP-MS), an inductively coupled plasma optical emission spectroscopy (ICP-OES) and/or the like may be used in addition to the SEM-EDS.

Hereinafter, the Examples and Comparative Examples will be described. However, the Examples are only illustrations of embodiments of the present disclosure, and the present disclosure is not limited to the Examples.

### Preparation Example 1: Preparation of First Particles

A Fe₁PO₄·H₂O iron phosphate precursor, lithium carbonate, MnPO₄, and titanium dioxide were mixed in a molar ratio of about 0.846:1.03:0.15:0.004. To the mixture, 10 wt% of glucose was added. A wet grinding process was performed by ball milling the mixture. The mixture was evaporated and dried in a heating furnace tray, and put in a vacuum oven for drying at about 85°C for about 4 hours. The dried mixture was baked under a nitrogen atmosphere at about 650°C for about 10 hours. The baked product was ground to obtain first particles in a single particle form (*e.g.,* a monolithic form). The chemical formula of the first particle was LiFe_{0.848}Mn_{0.148}Ti_{0.004}PO₄. The shape of the particles produced, and the number of moles of doped Mn and Ti are shown in Table 1.

### Preparation Example 2: Preparation of Second Particles

A high nickel-based precursor was prepared using a co-precipitation method. Nickel sulfate (NiSO₄·6H₂O), cobalt sulfate (CoSO₄·7H₂O) and aluminium sulfate (Al₂(SO₄)₃·18H₂O) in a molar ratio of about 94:5:1 as the raw materials of a nickel-based metal hydroxide were dissolved in distilled water as a solvent to prepare a metal raw material mixture. The metal raw material mixture, ammonia water and sodium hydroxide were put in a reactor and reacted. A slurry solution in the reactor was filtered and washed with distilled water having high purity. The washed material was dried in a hot air oven at about 210°C for about 24 hours to obtain a small size precursor (Ni_{0.94}Co_{0.05}Al_{0.01}(OH)₂) powder with an average particle diameter of about 4 µm.

The high nickel-based precursor and anhydrous lithium hydroxide (LiOH) were dry mixed using a Henschel mixer. The mixing was performed so that the molar ratio of lithium to the transition metals was about 1:1. The transition metals refers to the total sum of transition metals (Ni+Co+Al) contained in the high nickel-based precursor. A melting agent was additionally added to the mixture and a heat treatment (*i.e.,* baking process) was performed under an oxygen atmosphere at about 750°C for about 15 hours to synthesize second particles as the high nickel-based positive electrode active material. The second particles were ground using a Jet mill with a pressure of about 3 bars.

The second particles were added to distilled water and washed. Boron oxide and aluminium oxide corresponding to about 3 mol% based on the total sum of the transition metals of the second particles were added to perform a boron and aluminium coating. The second particles were dried at about 150°C for about 12 hours and heated (*i.e.,* surface treated) under an oxygen atmosphere at about 700°C for about 15 hours.

In other words, Preparation Example 1 involved creating first particles by mixing an iron phosphate precursor, lithium carbonate, MnPO₄, and titanium dioxide in specific molar ratios, followed by adding glucose. This mixture underwent wet grinding, evaporation, and drying at 85°C for 4 hours. The dried mixture was then heat treated under a nitrogen atmosphere at 650°C for 10 hours, resulting in first particles with the chemical formula LiFe_{0.848}Mn_{0.148}Ti0.₀₀₄PO₄.

Preparation Example 2 described the creation of second particles using a high nickel-based precursor prepared through co-precipitation. Nickel sulfate, cobalt sulfate, and aluminium sulfate were dissolved in distilled water, reacted with ammonia water and sodium hydroxide, and then filtered and dried. The resulting precursor was mixed with anhydrous lithium hydroxide and a melting agent, then heat treated at 750°C for 15 hours. The second particles were ground, washed, coated with boron and aluminium oxides, and finally heat treated at 700°C for 15 hours.

### Preparation Example 3: Preparation of Second Particles

Second particles were prepared by substantially the same method as in Preparation Example 2 except the raw materials of the nickel-based metal hydroxide, the nickel sulfate (NiSO₄·6H₂O), cobalt sulfate (CoSO₄·7H₂O) and aluminium sulfate (Al₂(SO₄)₃·18H₂O), were mixed in a molar ratio of about 91.5:7.5:1.

### Preparation Example 4: Preparation of Second Particles

Second particles were prepared by substantially the same method as in Preparation Example 2 except the raw materials of the nickel-based metal hydroxide, the nickel sulfate (NiSO₄·6H₂O), cobalt sulfate (CoSO₄·7H₂O) and aluminium sulfate (Al₂(SO₄)₃·18H₂O), were mixed in a molar ratio of about 89:10:1.

### Example 1: Preparation of Mixture of First Particles and Second Particles

A positive electrode active material was prepared by mixing the first particles of Preparation Example 1 and the second particles of Preparation Example 2 in a weight ratio of about 80:20.

### Example 2: Preparation of Mixture of First Particles and Second Particles

A positive electrode active material was prepared by mixing the first particles of Preparation Example 1 and the second particles of Preparation Example 3 in a weight ratio of about 80:20.

### Example 3: Preparation of Mixture of First Particles and Second Particles

A positive electrode active material was prepared by mixing the first particles of Preparation Example 1 and the second particles of Preparation Example 3 in a weight ratio of about 85:15.

### Comparative Example 1

A positive electrode active material was prepared by mixing the first particles of Preparation Example 1 and the second particles of Preparation Example 2 in a weight ratio of about 90:10.

### Comparative Example 2

A positive electrode active material was prepared by mixing the first particles of Preparation Example 1 and the second particles of Preparation Example 2 in a weight ratio of about 85:15.

### Comparative Example 3

A positive electrode active material was prepared by mixing the first particles of Preparation Example 1 and the second particles of Preparation Example 3 in a weight ratio of about 90:10.

### Comparative Example 4

A positive electrode active material was prepared by mixing the first particles of Preparation Example 1 and the second particles of Preparation Example 4 in a weight ratio of about 90:10.

### Comparative Example 5

A positive electrode active material was prepared by mixing the first particles of Preparation Example 1 and the second particles of Preparation Example 3 in a weight ratio of about 75:25.

### Comparative Example 6

A positive electrode active material was prepared by mixing the first particles of Preparation Example 1 and the second particles of Preparation Example 4 in a weight ratio of about 70:30.

### Comparative Example 7

A positive electrode active material was prepared by mixing the first particles of Preparation Example 1 and the second particles of Preparation Example 4 in a weight ratio of about 60:40.

### Manufacture of Positive Electrode

For each of the Examples and Comparative Examples, 95 wt% of the final positive electrode active material, 3 wt% of a polyvinylidene fluoride binder and 2 wt% of a carbon black conductive material were mixed in an N-methylpyrrolidone solvent to prepare a positive electrode active material slurry. The positive electrode active material slurry was applied on an aluminium current collector, dried and rolled to manufacture a positive electrode.

### Manufacture of Negative Electrode

Graphite, a binder and a conductive material were mixed in an N-methylpyrrolidone solvent to prepare a negative electrode active material slurry. The negative electrode active material slurry was applied on a copper current collector, dried and rolled to manufacture a negative electrode.

### Fabrication of Rechargeable Lithium Battery

A coin full cell was formed using the positive electrode and the negative electrode prepared. A polypropylene film (Celgard^{™} 3510) was used as a separator. As an electrolyte, an electrolyte solution obtained by mixing 1.3 M LiPF₆ with a mixture solvent of ethylene carbonate (EC): diethyl carbonate (DEC): fluoroethylene carbonate (FEC) (2:6:2 by volume ratio) was used.

### Evaluation Example 1: Analysis of the Surface of the Positive Electrode Active Material

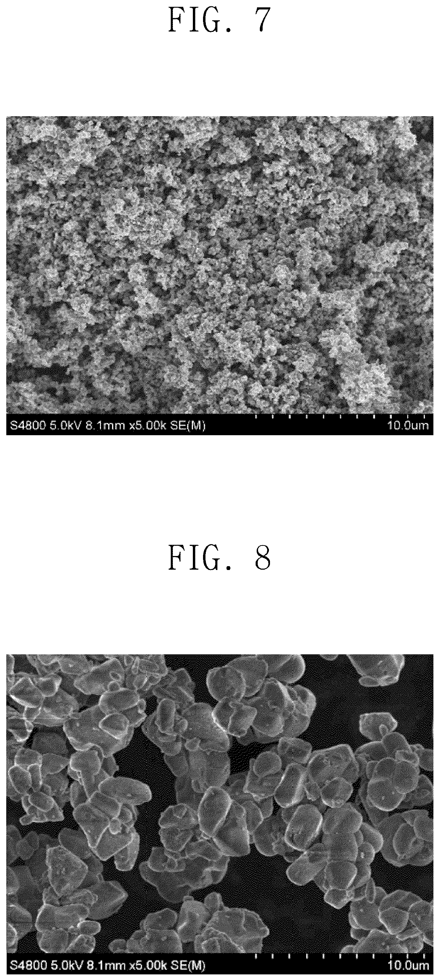

The scanning electron microscope (SEM) image of the first particles prepared in Preparation Example 1 is shown in FIG. 7. The SEM image of the second particles prepared in Preparation Example 2 is shown in FIG. 8. Referring to FIG. 7, it can be confirmed that the first particles according to Preparation Example 1 have a fine single particle form with a nano-size. Referring to FIG. 8, it can be confirmed that the second particles according to Preparation Example 2 have a single crystal form with a micrometer size. It can be confirmed that the second particle is a single crystal or has a form in which a plurality of single particles are attached to each other. In other words, the scanning electron microscope (SEM) image of the first particles prepared in Preparation Example 1 is shown in FIG. 7, while the SEM image of the second particles prepared in Preparation Example 2 is shown in FIG. 8. As seen in FIG. 7, the first particles from Preparation Example 1 exhibit a fine single particle form at the nanoscale. In contrast, FIG. 8 reveals that the second particles from Preparation Example 2 have a single crystal form at the micrometer scale. It can be observed that the second particles are either single crystals or are multiple single particles attached to each other.

### Evaluation Example 2: Evaluation of Active Material

The Mn and Co contents, the ratio of the Mn content (*e.g.,* amount) to the Co content (*e.g.,* amount), and the average pellet density (PD) of the positive electrode active materials of Examples 1 to 3 and Comparative Examples 1 to 7 are shown in Table 1. The average pellet density was measured by putting 3 g of the positive electrode active material in a pellet mold and applying a force of about 4.0 US tons for about 30 seconds.

**Table 1**

| Division | Mn content (mol%) | Co content (mol%) | Mn:Co (ratio) | PD (g/cc) |
|---|---|---|---|---|
| Example 1 | 12 | 1 | 12:1 | 2.75 |
| Example 2 | 12 | 1.5 | 8:1 | 2.75 |
| Example 3 | 12.75 | 1.125 | 11.33:1 | 2.72 |
| Comparative Example 1 | 13.5 | 0.5 | 27:1 | 2.50 |
| Comparative Example 2 | 12.75 | 0.75 | 17:1 | 2.71 |
| Comparative Example 3 | 13.5 | 0.75 | 18:1 | 2.60 |
| Comparative Example 4 | 13.5 | 1 | 13.5:1 | 2.51 |
| Comparative Example 5 | 11.25 | 1.875 | 6:1 | 2.76 |
| Comparative Example 6 | 10.5 | 3 | 3.5:1 | 2.72 |
| Comparative Example 7 | 9 | 4 | 2.25:1 | 2.72 |

Referring to Table 1, the positive electrode active materials according to Examples 1 to 3 have similar or higher average pellet density compared to the positive electrode active materials of Comparative Examples 1 to 7. In addition, the positive electrode active materials according to Examples 1 to 3 exhibit high pellet densities of about 2.7 g/cc or more.

### Evaluation Example 3: Evaluation of Battery Properties

The properties of the rechargeable lithium batteries fabricated using the positive electrode active materials of Examples 1 to 3 and Comparative Examples 1 to 7 were evaluated.

Rechargeable lithium batteries were initially charged under constant current (about 0.1 C) conditions up to about 4.25 V, and after resting for about 10 minutes, discharged under constant current (about 0.1 C) conditions until about 3.0 V to carry out initial charging and discharging. Then, charging and discharging were repeated 50 times at about -20°C with about 0.5 C/0.5 C (constant current during charging/discharging). While repeating charging and discharging, average voltages and capacities at about -20°C were measured. The evaluation results of the battery properties are shown in Table 2.

**Table 2**

| | Mixing ratio | | Coin cell | | | | | | |
|---|---|---|---|---|---|---|---|---|---|
| | First particl es (wt%) | Secon d particl es (wt%) | 4.3 V Charge amount (mAh/g ) | 4.3 V Dischar ge amount (mAh/g) | 4.3 V Effici ency (%) | Avera ge volta ge (V) | -20°C Dischar ge capacity (mAh/g) | Capacit y per volume (mAh/c c) | 4.3 V lifetime (%, 50cyc) |
| Example 1 | 80 | 20 | 173.8 | 161.5 | 93.4 | 3.4 | 86.8 | 415.3 | 96.5 |
| Example 2 | 80 | 20 | 172.3 | 161.0 | 93.4 | 3.4 | 89.0 | 442.8 | 96.7 |
| Example 3 | 85 | 15 | 169.2 | 159.1 | 94.0 | 3.4 | 87.0 | 432.8 | 97.0 |
| Comparative Example 1 | 90 | 10 | 164.6 | 154.3 | 94.0 | 3.3 | 85.9 | 381.9 | 96.2 |
| Comparative Example 2 | 85 | 15 | 168.2 | 157.9 | 93.9 | 3.4 | 86.5 | 427.9 | 95.6 |
| Comparative Example 3 | 90 | 10 | 165.0 | 154.0 | 93.3 | 3.4 | 84 | 400 | 96.4 |
| Comparative Example 4 | 90 | 10 | 163.8 | 154.1 | 94.2 | 3.3 | 86.8 | 381.0 | 96.3 |
| Comparative Example 5 | 75 | 25 | 177.6 | 165.5 | 93.6 | 3.4 | 88.8 | 432.6 | 96.4 |
| Comparative Example 6 | 70 | 30 | 180.3 | 168.1 | 93.5 | 3.4 | 90.7 | 446.0 | 96.1 |
| Comparative Example 7 | 60 | 40 | 188.6 | 175.1 | 93.2 | 3.4 | 92.6 | 478.5 | 95.8 |

Referring to Table 2, the rechargeable batteries according to Examples 1 to 3 have higher capacity at about -20°C and similar or higher capacity per volume compared to the rechargeable batteries according to Comparative Examples 1 to 4.

In addition, the rechargeable batteries according to Examples 1 to 3 have better lifetime characteristics and high capacity retentions of about 96.5% or more after 50 cycles compared to the rechargeable batteries according to Comparative Examples 1 to 7.

A positive electrode active material according to embodiments of the present disclosure may have improved mixture density, capacity and energy density by mixing layered second particles with a base of olivine-based first particles. A positive electrode active material layer according to the present disclosure may be smoothly attached to a positive electrode current collector even with a relatively small amount of a binder. A rechargeable lithium battery according to embodiments of the present disclosure may have a relatively high average voltage.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Further, the use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

The portable device, vehicle, and/or the battery, *e.g.,* a battery controller, a device for manufacturing the active material or battery, and/or any other relevant devices or components according to embodiments of the present disclosure described herein may be implemented utilizing any suitable hardware, firmware (*e.g.,* an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

Certain embodiments are set out in the following clauses:
Clause 1. A positive electrode for a rechargeable lithium battery, the positive electrode comprising: a positive electrode current collector; and a positive electrode active material layer on the positive electrode current collector, wherein the positive electrode active material layer comprises the positive electrode active material as hereinbefore described and as claimed in the accompanying claims, a conductive material and a binder.
Clause 2. The positive electrode for a rechargeable lithium battery of Clause 1, wherein an amount of the binder is about 0.5 parts by weight to about 5 parts by weight based on about 100 parts by weight of the positive electrode active material layer.
Clause 3. The positive electrode for a rechargeable lithium battery of Clause 1 or Clause 2, wherein an amount of the conductive material is about 0.5 parts by weight to about 5 parts by weight based on about 100 parts by weight of the positive electrode active material layer.
Clause 4. A rechargeable lithium battery, comprising: a positive electrode as hereinbefore described, including in any one of Clauses 1 to 3, and as claimed in the accompanying claims; a negative electrode comprising a negative electrode current collector and a negative electrode active material layer on the negative electrode current collector; and a separator between the positive electrode and the negative electrode.
Clause 5. The rechargeable lithium battery of Clause 4, wherein an average voltage during discharging at a constant current of about 0.1 C, with a voltage range of about 2.5 V to about 4.25 V, is about 3.3 V to about 4 V or about 3.3 V to about 3.4 V.
Clause 6. The rechargeable lithium battery of Clause 4 or Clause 5, wherein a ratio of a capacity at -20°C to an initial capacity (capacity at -20°C/initial capacity) is about 50% or more.

## Claims

1. A positive electrode active material comprising:
first particles comprising a compound of Chemical Formula 1 and having a first average particle diameter; and
second particles comprising a compound of Chemical Formula 2 and having a second average particle diameter that is greater than the first average particle diameter:
Chemical Formula 1 Liₐ₁Feₓ₁Mn_{y1}X_{z1}PO_{4-b1},
wherein, in Chemical Formula 1, 0.8≤a1≤1.2, 0.8≤x1≤0.9, 0.1≤y1≤0.2, 0.001≤z1≤0.05, 0≤b≤0.05, x1 + y1 + z1 = 1, and X is at least one element selected from the group consisting of titanium (Ti), magnesium (Mg), vanadium (V) and niobium (Nb),
Chemical Formula 2 Liₐ₂Niₓ₂Co_{y2}B_{z2}Y_{c2}O_{2-b2},
wherein, in Chemical Formula 2, 0.8≤a2≤1.2, 0.8≤x2≤1.0, 0.05≤y2≤0.1, 0≤z2≤0.2 0≤c2≤0.05, 0≤b2≤0.05, x2 + y2 + z2 = 1, B is aluminium (Al), manganese (Mn), or a combination thereof, and Y is at least one element selected from the group consisting of Ti, Mg, zirconium (Zr), molybdenum (Mo) and Nb,
wherein the positive electrode active material comprises manganese (Mn) and cobalt (Co), and a ratio of an amount of Mn to an amount of Co in the positive electrode active material is about 7:1 to about 12:1; and
wherein an amount of the first particles is greater than an amount of the second particles.

2. The positive electrode active material of claim 1, wherein a mixing ratio of the first particles to the second particles is about 90:10 to about 70:30 based on weight.

3. The positive electrode active material of claim 1 or claim 2, wherein each of the first particles and each of the second particles is a single or monolithic particle.

4. The positive electrode active material of any preceding claim, wherein each of the second particles has a form in which a plurality of single particles are attached to each other.

5. The positive electrode active material of any preceding claim, wherein X is Ti.

6. The positive electrode active material of any preceding claim, wherein each of the first particles comprises a first coating layer comprising carbon (C), and an amount of carbon in each of the first particles is about 1.5 wt% to about 2.5 wt%.

7. The positive electrode active material of any preceding claim, wherein each of the second particles comprises a second coating layer, and each of the second coating layers comprises a boron-containing compound, an aluminium-containing compound or a combination thereof.

8. The positive electrode active material of any preceding claim, wherein the first average particle diameter is about 0.5 µm to about 2.5 µm.

9. The positive electrode active material of any preceding claim, wherein each of the first particles comprises at least one primary particle, and an average particle diameter of the primary particles of the first particles is about 100 nm to about 300 nm.

10. The positive electrode active material of any preceding claim, wherein the second average particle diameter is about 2.5 µm to about 5 µm.

11. The positive electrode active material of any preceding claim, wherein a pellet density of the positive electrode active material is about 2.6 g/cc to about 2.8 g/cc.

12. A positive electrode comprising:
a positive electrode current collector; and
a positive electrode active material layer on the positive electrode current collector,
wherein the positive electrode active material layer comprises the positive electrode active material of any one of claims 1 to 11, a conductive material and a binder, and
wherein the positive electrode is for a rechargeable battery.

13. The positive electrode of claim 12, wherein the binder is at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon.

14. The positive electrode for a rechargeable lithium battery of claim 12 or claim 13, wherein the conductive material comprises: a carbon-based material comprising natural graphite, artificial graphite, carbon black, acetylene black, Ketjen black, carbon fiber, carbon nano-fiber, and carbon nano-tube; a metal-based material comprising copper, nickel, aluminium or silver and having a metal powder or metal fiber form; a conductive polymer comprising a polyphenylene derivative; or a mixture thereof.

15. A rechargeable lithium battery comprising:
the positive electrode of any one of claims 12 to 14;
a negative electrode comprising a negative electrode current collector and a negative electrode active material layer on the negative electrode current collector; and
a separator between the positive electrode and the negative electrode.
